# EUROPÄISCHE PATENTANMELDUNG

(11) **EP 1 607 910 A2**
(43) Veröffentlichungstag der Anmeldung: **21.12.2005**
(21) Anmeldenummer: 05105203.3
(22) Anmeldetag: 14.06.2005
(51) Int. Cl.: G06T 11/20

(54) **Verfahren zur grafischen Darstellung von Gegenständen und technischen Prozessen auf einem Bildschirm**

(30) Priorität: 15.06.2004 DE 102004028793
(71) Anmelder: SIEMENS AKTIENGESELLSCHAFT, 80333 München (DE)
(72) Erfinder: Pfahlmann, Lothar, 91083, Baiersdorf (DE); Schaer, Stephan, 90455, Nürnberg (DE)

(57) **Zusammenfassung**

Die Erfindung betrifft ein Verfahren zur grafischen Darstellung von Gegenständen und/oder technischen Prozessen auf einem Bildschirm, sowie eine das Verfahren realisierender Editor. Bei der bildlichen Wiedergabe von Gegenständen oder der Veranschaulichung von technischen Prozessen ist es häufig erforderlich, mit mehreren Ansichten zu arbeiten. In den meisten Fällen benötigt man eine Übersichtsdarstellung sowie einen oder mehrere Einzeldarstellungen von Teilen des Gegenstandes oder des Prozesses. Bei grafischen Benutzeroberflächen besteht damit das Erfordernis, zwischen diesen verschiedenen Ansichten zu wechseln, wodurch der Anwender im Falle von mehreren Ansichten rasch den Überblick verliert. Zur Lösung dieses Problems wird vorgeschlagen, dass ein Tooltip (4) erscheint, wenn ein Anzeigegerät wie beispielsweise eine Computermaus mittels des Mauszeigers eine vorgegebene Zeit über einen vorgegebenen Bereich (6) der Anzeigefläche (3) verweilt, und dass der Tooltip (4) zumindest einen Teil des Gegenstandes und/oder des Prozesses (2) auf eine im Vergleich zur Anzeigefläche modifizierte Weise grafisch darstellt. Auf diese Weise kann unter Zuhilfenahme des Tooltips der selber Gegenstand und/oder derselbe technische Prozess in mehreren Sichten dargestellt werden.

## Beschreibung

Die Erfindung betrifft allgemein die Darstellung von Bildschirminhalten durch Computer und hierzu geeignete Anzeigeprogramme. Insbesondere betrifft die Erfindung die grafische Darstellung von Gegenständen oder technischen Verfahren durch grafische Editoren.

Die Veranschaulichung technischer Prozesse oder technischer Gegenstände erfolgt meist in Form von technischen Zeichnungen, Flussdiagrammen und so weiter. Um der Dreidimensionalität der Gegenstände Rechnung zu tragen, oder die genannten Prozesse umfassend darzustellen, werden im Regelfall mehrere Darstellungen gewählt. Man wählt für Gegenstände häufig verschiedene Ansichten, so beispielsweise eine perspektivische Ansicht, eine Seitenansicht, oder eine Aufsicht des Gegenstandes, oder fertigt Schnitte entlang vorbestimmter Linien an. Bei Prozessen, das heißt Arbeits- oder Herstellungsverfahren, sind meist Darstellungen in mehreren Abstraktionsebenen erforderlich. So kann eine erste Darstellung gewählt werden um den gesamten Prozess, zum Beispiel in Form eines Flussdiagramms, anzuzeigen. Eine zweite Darstellung kann einen Teilprozess darstellen, welcher beispielsweise ein einzelner Verarbeitungsschritt im gesamten Prozess ist, und welcher einem Element im Flussdiagramm entspricht.

Da die Bildschirmfläche begrenzt ist, muss beim Erstellen der verschiedenen Darstellungen meist ein Wechsel zwischen diesen Ansichten vorgenommen werden. Hierbei werden grafische Editoren eingesetzt mit denen verschiedene Ansichten in größenveränderlichen Fenstern dargestellt werden. Durch Auswahl entsprechender Einträge in aufklappbaren Menüs des jeweiligen Editors werden die Ansichten ausgewählt, Fenster in den Vordergrund gerückt, und in ihrer Größe eingestellt.

Bei grafischen Benutzeroberflächen, wie solchen der Betriebssysteme Windows® oder Macintosh®, sind Tooltips allgemein bekannt. Verweilt ein Mauszeiger eine vorgegebene Zeit über einen vorgegebenen Teil der Bildschirmoberfläche, so erscheint eine Anzeigefläche, welche erklärende Informationen zu einer Programmfunktion bereithält. So ist es bekannt, dass Programme über diverse Schaltflächen verfügen die mit einem Piktogramm belegt sind. Verweilt der Mauszeiger hinreichend lange über ein derartiges Piktogramm, so erscheint die besagte Anzeigefläche, und erläutert beziehungsweise erklärt die durch Anklicken der Schaltfläche auswählbare Programmfunktion.

Die US 5,995,101 offenbart einen Tooltip, dessen Grad an Ausführlichkeit mit der Zeit zunimmt. Bleibt der Mauszeiger nur eine kurze Zeit im besagten vorgegebenen Teil der Bildschirmoberfläche, d.h. im Fangbereich, so wird die Programmfunktion mit nur wenigen Worten erläutert. Bei einem längeren Verweilen des Mauszeigers im Fangbereich erscheint ein zweiter Tooltip mit einem längeren Erklärungstext. Bei noch längerer Anwesenheit des Mauszeigers im Fangbereich erscheint ein Tooltip, der die Funktion der Schaltflächen unter Zuhilfenahme eines Bildes oder eines Videos ausführlich erläutert.

Der Erfindung liegt die Aufgabe zu Grunde, eine ergonomischere Veranschaulichung technischer Gegenstände oder technischer Prozesse in verschiedenen Darstellungen an einem Bildschirm zu ermöglichen.

Die Lösung dieses technischen Problems erfolgt durch die Merkmale der unabhängigen Ansprüche. Vorteilhafte Weiterbildungen werden durch die Merkmale der abhängigen Ansprüche wiedergegeben oder lassen sich der Beschreibung in Verbindung mit den Figuren entnehmen.

Erfindungsgemäß wurde erkannt, dass sich die Veranschaulichung technischer Gegenstände oder technischer Prozesse über verschiedene Darstellungen an einem Bildschirm, insbesondere einem Computerbildschirm, dadurch verbessern lässt, dass ein Tooltip erscheint, wenn ein Eingabegerät eine vorgegebene Zeit über einen vorgegebenen Bereich der Anzeigefläche verweilt, und dass der Tooltip den Gegenstand und/oder den Prozess auf eine im Vergleich zur Anzeigefläche modifizierte Weise grafisch darstellt.

Die Erfindung erfüllt somit die oben genannte Aufgabe unter Verwendung eines Tooltips zur Darstellung grafischer Informationen welche den gleichen Gegenstand beziehungsweise den gleichen Prozess zum Inhalt haben wie die vorgenannte Anzeigefläche.

Als Eingabegerät kann eine Computermaus, ein Trackball, ein Lichtgriffel, ein Joystick, ein Grafiktablett oder dergleichen eingesetzt werden, mit dessen Hilfe ein Element der Bildschirmoberfläche bestimmt und selektiert bzw. ausgewählt wird. Durch die Aktivierung des Elements wird der Tooltip zum Vorschein gebracht, oder aber, sofern er bereits auf der Anzeigefläche angezeigt wird, zum Verschwinden gebracht.

Die über den Tooltip dargestellten grafischen Informationen können bei einem in der Anzeigefläche dargestellten Gegenstand eine andere Ansicht dieses Gegenstandes sein. Zeigt beispielsweise die Anzeigefläche den Gegenstand in einer Seitenansicht, so kann der Tooltip denselben Gegenstand in einer perspektivischen Ansicht zeigen. Auch ist es möglich, dass Anzeigefläche und Tooltip denselben Gegenstand in derselben Ansicht zeigen, dass aber der Tooltip den Gegenstand detailreicher und/oder mit einem anderen Maßstab, und insbesondere vergrößert darstellt.

Wird ein Herstellungs- oder Arbeitsverfahren grafisch dargestellt, so kann der Tooltip eine andere Abstraktionsebene dieses Verfahrens veranschaulichen. So kann beispielsweise die primäre Anzeigefläche den Gesamtprozess darstellen, wohingegen der Tooltip nur einen Teil des Prozesses zeigt. Auch kann der Tooltip einen oder mehrere Verfahrensschritte des Gesamtverfahrens detailreicher darstellen, oder aber hinterlegte Zusatzinformationen anzeigen. Im letztgenannten Fall kann beispielsweise die zum jeweiligen Verfahrenschritte benötigte Prozesszeit angezeigt werden um den Gesamtprozess in zeitlicher Hinsicht zu optimieren.

Wie bei den bekannten Tooltips wird der Tooltip angezeigt, wenn ein Mauszeiger eine vorgegebene Zeit in einem Fangbereich verweilt. Die Verweilzeit kann in einem Bereich von beispielsweise einer halben Sekunde bis zu drei Sekunden liegen, und ist bevorzugterweise im Editor vom Benutzer einstellbar. Der Tooltip wird wieder ausgeblendet, wenn der Mauszeiger diesen Fangbereich verlässt, oder wenn der Mauszeiger noch im Fangbereich ist, eine vorgegebene Zeitspanne jedoch verstrichen ist. Der Quellcode für den die zusätzlichen grafischen Informationen darstellende Tooltip kann fest in den Quellcode des Editors integriert sein. Es besteht jedoch auch die Möglichkeit, dass der Tooltip als sogenannte DLL-Datei (von englisch dynamic link library) realisiert wird, so dass er über eine vordefinierte Schnittstelle auch anderen Programmen zur Verfügung stehen kann.

Bei der vorgeschlagenen Vorgehensweise sorgt somit ein Tooltip für eine inhaltliche Verzahnung der technischen Darstellung der primären Anzeigefläche mit der weiteren Darstellung des Tooltips. Zusammenhängende technische Darstellungen desselben Gegenstandes beziehungsweise desselben technischen Prozesses müssen damit nicht über mehrere, miteinander nicht zusammenhängende Fenster zusammengestellt werden, und mühsam unter Zuhilfenahme von auf klappbaren Menüs heranpositioniert werden. Auf diese Weise ist ein schneller und gezielter Abruf weiterer Darstellungen möglich was wunschgemäß eine ergonomische Verbesserung mit sich bringt.

Der erfindungsgemäß eingesetzte Tooltip wird bevorzugt über eine vorgegebene Benutzerhandlung, beispielsweise das Drücken mindestens einer Taste einer Computertastatur und/oder durch Anklicken des Tooltips, in ein Anzeigefenster umgewandelt. Dieses Anzeigefenster kann editiert werden, und der darüber modifizierte Inhalt des Anzeigefensters abgespeichert werden. Der modifizierte Inhalt des Anzeigefensters kann als modifizierter Tooltip zur Verfügung stehen. Auf diese Weise ist somit eine Umwandlung eines Tooltips in ein normales Anzeigefenster und umgekehrt vorgesehen. Diese Umwandlungsmöglichkeit steigert den Bedienkomfort nochmals, weil der Benutzer, wenn er eine Darstellung verändern will, nicht zuerst mühsam durch Auswahl eines Menüpunktes innerhalb der Fensterstruktur seines Editors eine Anzeigefläche generieren muss.

Das erfindungsgemäße Verfahren ist besonders geeignet, den funktionsmäßigen, organisatorischen, und/oder zeitlichen Ablauf eines Herstellungs- oder Arbeitsprozesses darzustellen.

Diese Darstellung kann auf beliebige Art und Weise erfolgen, und so beispielsweise in Form eines Flussdiagramms.

Das Verfahren wird bevorzugt mit einem Computerprogramm durchgeführt, das direkt in den internen Speicher eines digitalen Computers geladen werden kann. Das Programm umfasst hierzu Programm- bzw. Softwarecodeabschnitte, mit denen die entsprechenden Verfahrenschritte unter Zuhilfenahme des Tooltips durchgeführt werden können wenn das Programm auf einem Computer läuft. Das Computerprogramm kann hierbei auf einem Datenträger wie beispielsweise einer CD oder einer DVD abgelegt sein, oder sich einem Computerspeicher wie dem RAM befinden. Weiterhin kann es über entsprechende Datennetze wie LAN's, WAN's oder dem Internet unter Zuhilfenahme eines elektrischen Trägersignals übertragen werden.

Nachfolgend soll das vorliegende Verfahren sowie der zugehörige Editor anhand von Ausführungsbeispielen in Verbindung mit den Zeichnungen näher erläutert werden. Hierbei zeigt
- Figur 1:: einen Arbeitsplatz für die Verwendung des grafischen Editors nach dem Stand der Technik,
- Figur 2:: ein Flussdiagramm für Arbeitsschritte in einer Waschstraße,
- Figur 3:: eine Detaildarstellung zum Arbeitsschritt S3, erzeugt durch Anklicken des Fangbereichs "V",
- Figur 4:: eine Detaildarstellung zum Arbeitsschritt S4, erzeugt durch Anklicken des Fangbereichs "C".

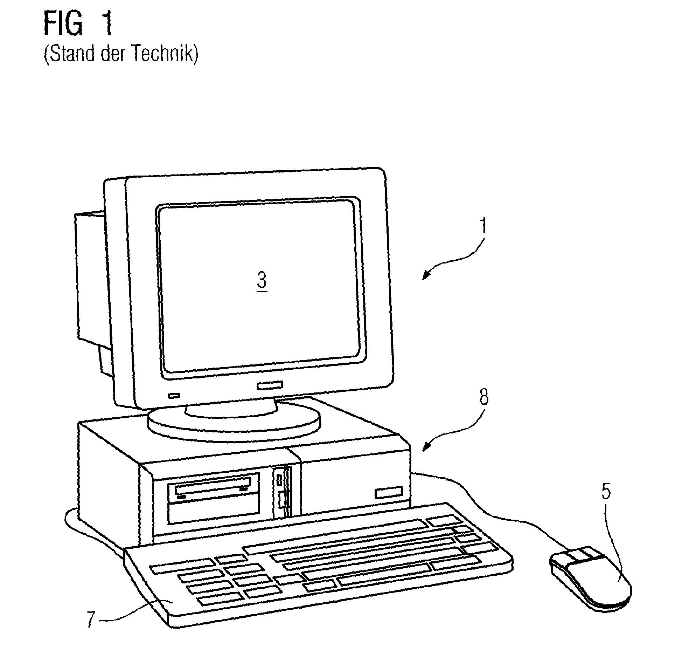

Figur 1 zeigt in einer perspektivischen Ansicht das Anwendungsgebiet der vorliegenden Erfindung, nämlich die Darstellung von Bildschirminhalten durch einen Computer 8. Der Computer 8 verfügt über eine Maus 5 und überträgt darzustellende Daten zu einem Bildschirm 1. Der Bildschirm 1 stellt die Daten in einem oder mehreren Anzeigefenstern 3 dar.

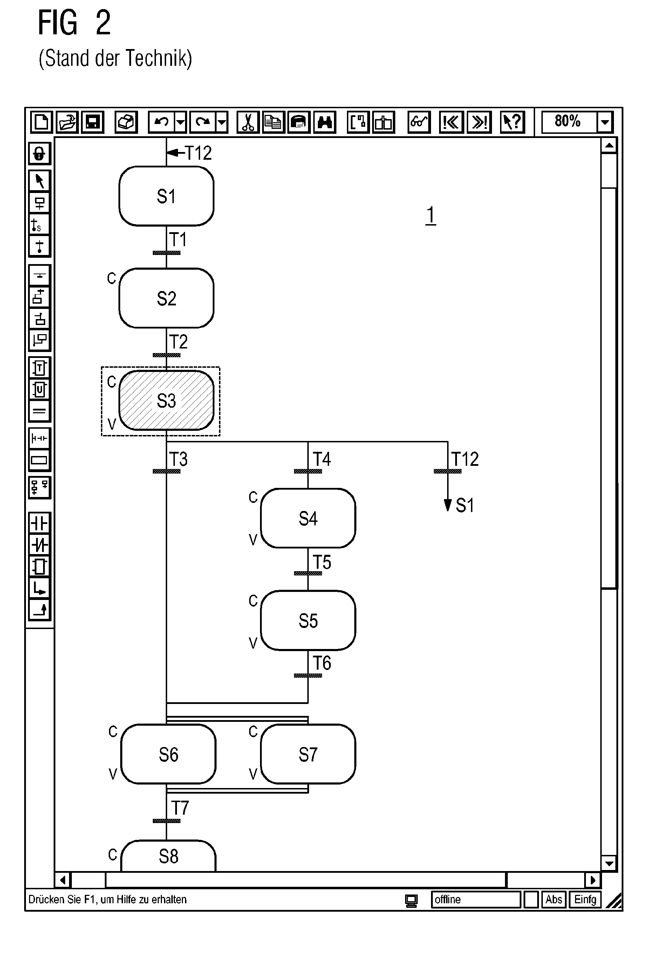

Figur 2 zeigt ein Fenster 1 des grafischen Editors S7GRAPH, welcher von der Anmelderin der vorliegenden Erfindung kommerziell vertrieben wird, und welcher unter dem Betriebssystem Microsoft Windows® läuft. In diesem Fenster sind Stationen S1, S2, ... S8 in einer Waschstraße dargestellt. Diese Stationen sind S1 (Eintritt in die Waschanlage), S2 (Beginn der Autowäsche), S3 (Spülen), S4 (Vorwäsche), S5 (Zurück), S6 (Hauptwäsche), S7 (Unterbodenwäsche), und S8 (Klarspülen).

Um den Aufenthaltsort eines Fahrzeugs innerhalb der Waschstraße eindeutig zu identifizieren, aber auch um den Status von Anlagenkomponenten zu ermitteln, gibt es zwischen den Fahrzeugstationen abfragbare Sensoren. Mit Hilfe dieser Sensoren kann abgefragt werden, ob gewisse Bedingungen, vorliegend Transitionsinhalte T1, T2 ... T12 genannt, erfüllt sind. Beispielsweise kann mit dem Transitionsinhalt T12 abgefragt werden, ob ein Fahrzeug in die Waschstraße hineingefahren ist. Ein anderer Transitionsinhalt wäre, ob eine Waschbürste in seine Sollposition geschwenkt wurde, oder ob eine Unterbodenwäsche gestartet wurde.

Weiterhin gibt es bzgl. jeder Station ein oder mehrere Verriegelungsbedingungen C, d.h. es kann abgefragt werden, ob eine Schutzvorrichtung aktiviert wurde. Beispielsweise kann abgefragt werden, ob ein Schutzgitter in eine Sollposition bewegt wurde, oder ob ein Notschalter gedrückt wurde. Weiterhin gibt es Überwachungsbedingungen V, mit deren Hilfe unterschiedliche Überwachungen programmiert werden können, beispielsweise maximale Überwachungs- bzw. Verweilzeiten zu den jeweiligen Schritten.

Bei der grafischen Darstellung des Ablaufs einer Fahrzeugwäsche in der Waschanlage sind die Überwachungsbedingungen V und die Verriegelungsbedingungen C von besonderem Interesse. Soll beispielsweise bei einer Fehlersuche herausgefunden werden, warum die Station S3 nicht mehr ordnungsgemäß funktioniert, so benötigt man neben einer in einem Fenster 3 gezeigten Übersichtsdarstellung auch die Detailinformationen zu den Überwachungsbedingungen V.

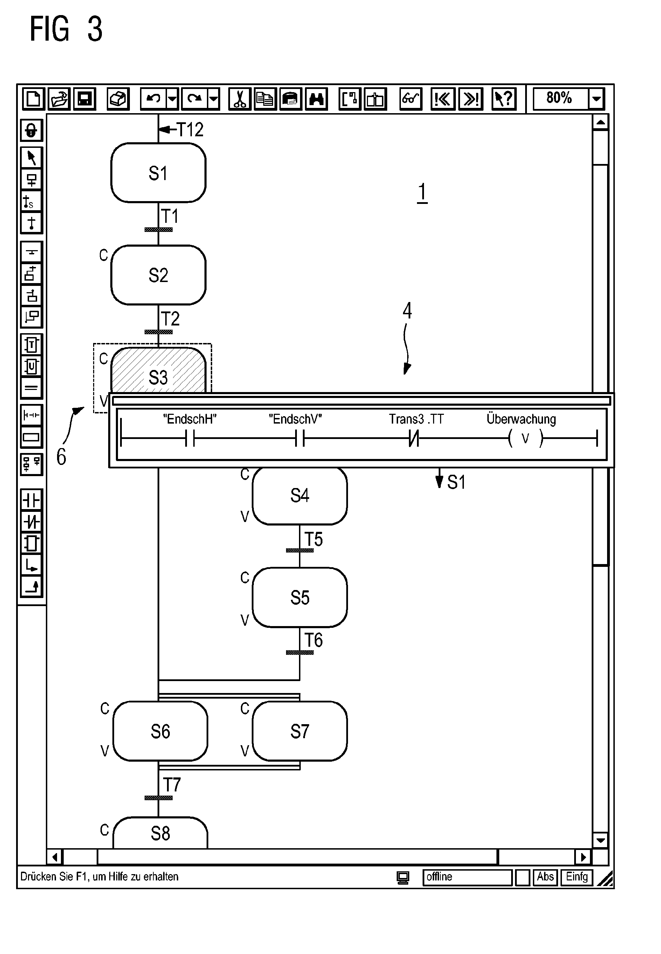

Dies geschieht erfindungsgemäß so, dass nach einem Verweilen eines Mauszeigers in einem Fangbereich 6 um den Buchstaben V ein Tooltip 4 erscheint, vgl. Figur 3. Der Fangbereich 6 ist eine rechteckige Fläche die so groß gewählt wird, dass der Buchstabe V gerade hinein passt. Die Verweilzeit beträgt hierbei zwischen ½ sec und 3 sec, und kann im diesbezüglich modifizierten S7GRAPH-Editor vom Anwender eingestellt werden.

Der Quellcode des Tooltips ist fest im Quellcode des Editors integriert. Der Tooltip 4 zeigt grafische Detailinformationen desselben Prozesses an, der auch durch das Anzeigefenster 3 dargestellt wird. Vorliegend zeigt der Tooltip 4 den Status von Schaltern und Ventilen im Bereich der Station S3 an, deren Namen "EndschH", "EndschV", "Trans3.TT" und "Überwachung" lauten, deren Funktionen im Rahmen dieser Erfindung aber nicht näher interessieren.

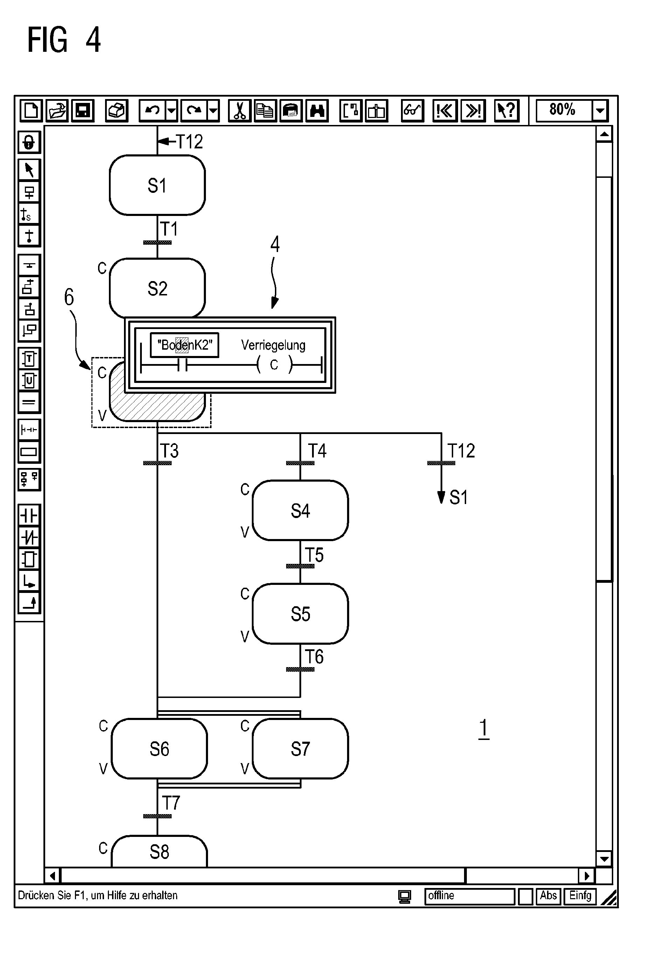

Im oben genannten Beispielsfall sind auch die Verriegelungsbedingungen C von Interesse. Verweilt ein Mauszeiger in einem Fangbereich 6 um den Buchstaben C, so erscheint ein Tooltip 4, vgl. Figur 4. Auch hier ist der Fangbereich eine quadratische Fläche, die so groß gewählt wird, dass der Buchstabe C gerade hinein passt. Durch einfaches Anklicken kann dieses editiert werden. Im vorliegenden Fall ist dies daran zu erkennen, dass der Schriftzug "BodenK2" teilweise farblich invertiert dargestellt wird.

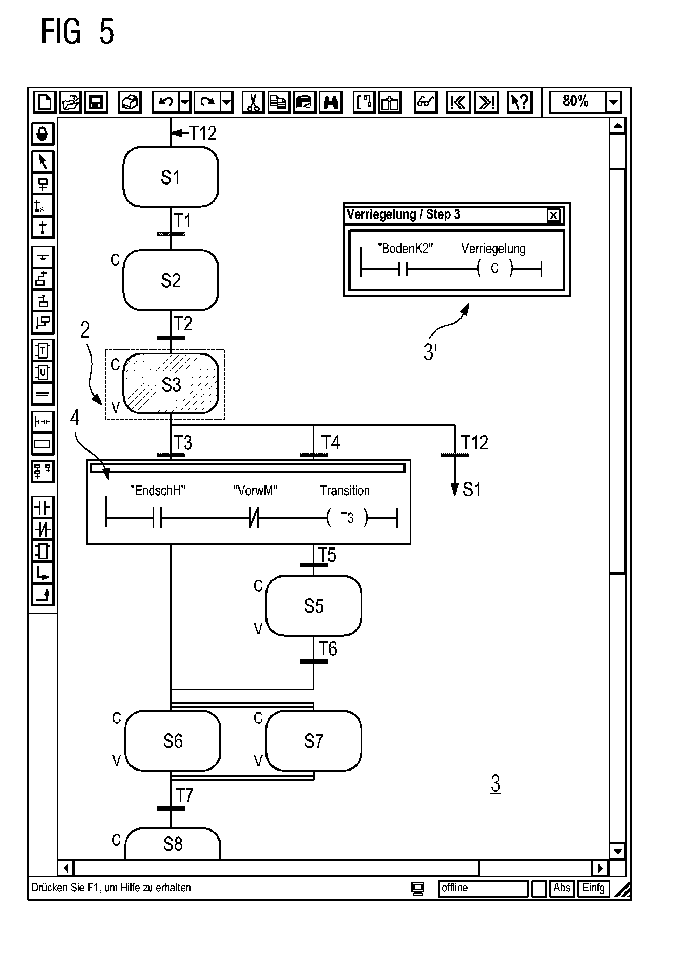

Figur 5 zeigt ein Anzeigefenster 3, bei dem Informationen zum Verfahrenschritt S3 grafisch dargestellt sind. Durch Verweilen im Fangbereich "V" links neben dem Symbol S3 wurde ein Tooltip erzeugt, der durch Anklicken in ein zweites Anzeigefenster 3' überführt wurde. Nachfolgend wurde durch Verweilen im Fangbereich "T3" unterhalb von S3 ein Tooltip 4 erzeugt, der nähere Details zu der Transition T3 (Weiterschaltbedingung) offenbart. Wie allgemein üblich überlagert der Tooltip 4 den bisherigen Inhalt der Anzeigefläche 3.

Anhang A zeigt eine schematische Programmieranweisung zur Erzeugung und Verwaltung eines Tooltip-Fensters. Diese Programmieranweisung wird in den Quelltext des Editors integriert. In Zeile 1 wird zunächst abgefragt, ob sich der Mauszeiger im Fangbereich des Tooltips befindet. In Zeile 3 werden aus einem entsprechenden Dokument auf der Festplatte diejenigen Daten geholt, welche nachfolgend im Tooltip-Fenster grafisch dargestellt werden sollen. Anschließend wird ein geeignetes Fenster erzeugt (Zeile 4). In Zeile 5 erfolgt die Interpretation der Daten und deren grafische Darstellung im Tooltip-Fenster. Zeile 6 legt fest, dass der Tooltip an der Mausposition dargestellt wird.

Mit den Zeilen 9 und 10 wird eine Bewegung des Mauszeigers erfasst und für den Fall, dass sich der Mauszeiger aus dem Fangbereich 6 entfernt und auch das Tooltip-Fenster 4 nicht in seiner Position fixiert ist, das Tooltip-Fenster 4 geschlossen (Zeile 12).

### Anhang A

Schematische Programmieranweisung zur Erzeugung und Verwaltung eines Tooltip-Fensters:

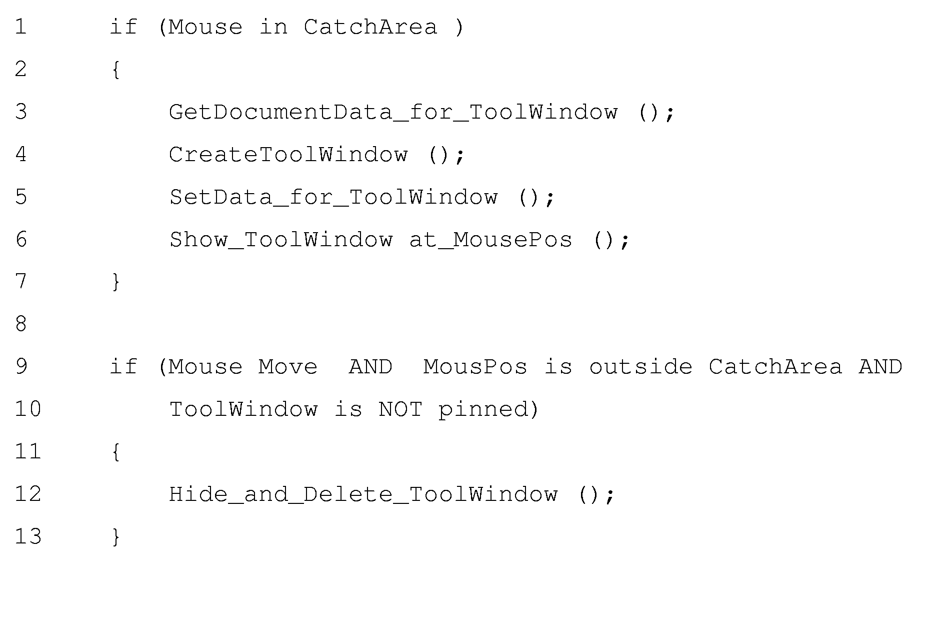

## Patentansprüche

1. Verfahren zur grafischen Darstellung von Gegenständen und/oder technischen Prozessen auf einem Bildschirm (1), insbesondere einem Computerbildschirm, bei dem der Gegenstand und/oder der Prozess (2) auf einer Anzeigefläche (3) des Bildschirms dargestellt wird, **dadurch ge-kennzeichnet, dass** ein Tooltip (4) erscheint, wenn ein Eingabegerät (5) eine vorgegebene Zeit über einen vorgegebenen Bereich (6) der Anzeigefläche (3) verweilt, und dass der Tooltip zumindest einen Teil des Gegenstands und/oder des Prozesses auf eine im Vergleich zur Anzeigefläche modifizierte Weise grafisch darstellt.

2. Verfahren nach Anspruch 1, **dadurch ge-kennzeichnet, dass** der Tooltip über eine vorgegebene Benutzerhandlung in ein Anzeigefenster umgewandelt wird.

3. Verfahren nach Anspruch 2, **dadurch ge-kennzeichnet, dass** die Umwandlung durch das Drücken mindestens einer Taste einer Computertastatur (7) und/oder durch Anklicken des Tooltips mit einer Computermaus (5) veranlasst wird.

4. Verfahren nach Anspruch 2 oder 3, **dadurch gekennzeichnet, dass** der Inhalt des Anzeigefensters vom Benutzer modifiziert wird, das Anzeigefenster geschlossen wird, und sein Inhalt zukünftig über einen Tooltip zur Verfügung steht.

5. Verfahren nach Anspruch 4, **dadurch ge-kennzeichnet, dass** der funktionsmäßige, organisatorische, und/oder zeitliche Ablauf eines Herstellungs- oder Arbeitsprozesses dargestellt wird.

6. Verfahren nach Anspruch einem der Ansprüche 1 bis 5, **dadurch gekennzeich-net, dass** der Tooltip den Gegenstand in einer anderen Ansicht im Vergleich zu der Anzeigefläche dargestellt.

7. Computerprogramm, das direkt in den internen Speicher eines digitalen Computers geladen werden kann und Softwarecodeabschnitte umfasst, mit denen die Schritte gemäß einem der Ansprüche 1 bis 6 ausgeführt werden, wenn das Produkt auf einem Computer läuft.

8. Computerprogramm nach Anspruch 7, verkörpert auf einem Datenträger, abgelegt in einem Computerspeicher, oder übertragen mittels eines elektrischen Trägersignals.
